# EUROPÄISCHE PATENTANMELDUNG

(11) **EP 4 636 272 A1**
(43) Veröffentlichungstag der Anmeldung: **22.10.2025**
(21) Anmeldenummer: 24170470.9
(22) Anmeldetag: 16.04.2024
(51) Int. Cl.: F16C 19/06, F16C 35/04, F16C 35/067

(54) **LAGERANORDNUNG FÜR EINE ANTRIEBSKOMPONENTE EINES ELEKTRISCHEN ANTRIEBS**

(71) Anmelder: maxon international ag, 6072 Sachseln (CH)
(72) Erfinder: Hupfer, Florian, 79263 Simonswald (DE); Schmidlin, Kai, 79331 Teningen (DE)
(74) Vertreter: Grünecker Patent- und Rechtsanwälte PartG mbB

(57) **Zusammenfassung**

Lageranordnung für eine Antriebskomponente eines elektrischen Antriebs, insbesondere für einen Elektromotor oder ein Getriebe mit einem Lageraufnahmeteil und einem in dem Lageraufnahmeteil (4) ausgebildeten Lagersitz (12), in dem ein Lager (3) der Antriebskomponente zur drehbaren Lagerung einer Welle der Antriebskomponente anordbar ist, wobei eine radiale Lageraufnahme des Lagersitzes mehrere in radialer Richtung vorstehende verformbare Abschnitte (17) aufweist, die an einem im Lagersitz angeordneten Lager anliegen. Angrenzend an die verformbaren Abschnitte im Lageraufnahmeteil ist jeweils eine Bohrung (18) vorgesehen, wobei in der Bohrung jeweils ein Spreizelement (19) eingepresst ist, um die in radialer Richtung vorstehenden verformbaren Abschnitte auszubilden. Darüber hinaus betrifft die Erfindung ein Verfahren zum Herstellen eines entsprechenden Lageraufnahmeteils sowie eine Antriebskomponente eines elektrischen Antriebs, insbesondere ein Elektromotor oder ein Getriebe mit einem Gehäuse, einer Welle, einem Lager und einem Lageraufnahmeteil mit einer solchen Lageranordnung.

## Beschreibung

Die vorliegende Erfindung betrifft eine Lageranordnung für eine Antriebskomponente eines elektrischen Antriebs, insbesondere für einen Elektromotor oder ein Getriebe mit einem Lageraufnahmeteil und einem in dem Lageraufnahmeteil ausgebildeten Lagersitz, in dem ein Lager der Antriebskomponente zur drehbaren Lagerung einer Welle der Antriebskomponente anordbar ist, wobei eine radiale Lageraufnahme des Lagersitzes mehrere in radialer Richtung vorstehende verformbare Abschnitte aufweist, die an dem im Lagersitz angeordneten Lager anliegen. Darüber hinaus betrifft die Erfindung ein Verfahren zum Herstellen eines entsprechenden Lageraufnahmeteils sowie eine Antriebskomponente mit einem Gehäuse, einer Welle, einem Lager und einem Lageraufnahmeteil mit einer solchen Lageranordnung.

Beispielsweise benötigen Elektromotoren zur drehbaren Lagerung einer Motorwelle und eines darauf angeordneten Rotors generell ein Motorlager, das in einem Lagersitz eines Lageraufnahmeteils fixiert ist. Dabei ist das Lageraufnahmeteil üblicherweise mit dem Motorgehäuse verbunden oder von dem Motorgehäuse ausgebildet. Eine bekannte Lageranordnung für als Außenläufermotoren ausgebildete Elektro-Kleinmotoren zeigt die DE 43 22 575 A1, bei der zur drehbaren Lagerung eines Rotors in einer Lageraufnahme des Stators ein Motorlager eingepasst ist, wobei die Lageraufnahme einerseits von drei am Umfang verteilten formstabilen Halteabschnitten und andererseits von mindestens einem in radialer Richtung elastisch verformbaren Abschnitt zur kraftschlüssigen Anlage an das Motorlager ausgebildet ist.

Die gerade bei der Herstellung der Komponenten von elektrischen Antrieben eingesetzten formbaren Werkstoffe, beispielsweise Kunststoffe und Metallgussmaterialien, erfordern in der Herstellung vergleichsweise hohe Fertigungstoleranzen und weisen bei einer Alterung oder einem längeren Betrieb Änderungen in den Abmessungen auf, beispielsweise durch die Aufnahme von Feuchtigkeit. Demgegenüber benötigen Lager, insbesondere Wälzlager oder Kugellager, möglichst genaue und gleichbleibende Abmessungen der Lageraufnahme, um eine sichere Verbindung mit Vorspannung zwischen dem Lager und der Lageraufnahme zu ermöglichen, insbesondere mittels Presssitz des Lagers im Lagersitz.

Bei einfachen Antriebskomponenten mit Gehäuseteilen aus Kunststoff-Spritzguss kann nur mit verhältnismäßig hohem Aufwand im Bereich der Lageraufnahme die erforderliche Genauigkeit des Lagersitzes gewährleistet werden. Häufig weicht die Kontur der Lagerbohrung von einer notwendigen Zylinderkontur ab, so dass ein weiterer Bearbeitungsvorgang der Innenflächen der Lagerbohrung erforderlich ist, um einen einwandfreien und passgenauen Lagersitz für die Aufnahme des Lagers zu realisieren. Solche zusätzlichen Bearbeitungsvorgänge zur Vermeidung von Exzentrizitäts- und Fluchtungsfehlern des Lagersitzes verbessern zwar die Lebensdauer der jeweiligen Antriebskomponenten und reduzieren deren Laufgeräusche, führen aber auch zu deutlich höheren Herstellungskosten.

Aufgrund der geringen Festigkeit und des Fließverhaltens von Kunststoffen ist die Verwendung eines rein zylindrischen Lagersitzes und eines einfachen Presssitzes des Lagers in dem Lageraufnahmeteil oftmals nicht ausreichend, um eine sichere und dauerhafte Befestigung des Lagers in dem Lageraufnahmeteil zu erreichen. Die genannten Eigenschaften von Kunststoff verhindern sowohl ein sicheres Einpressen des Lagers als auch eine dauerhafte Verbindung, da ein Lagersitz aus Kunststoff sich über die Zeit verändert und das Lager nicht zuverlässig hält. Dadurch kann das Lager in der Lagerbohrung durchrutschen, sich darin bewegen oder vollständig herausfallen. Auch eine Herstellung eines Lageraufnahmeteils mit einem großen Übermaß der Lagerbohrung zur Anpassung an die üblichen Fertigungstoleranzen beim Spritzgießen und die produktionsbedingten Abweichungen der Abmessungen des Lagersitzes sowie ein anschließendes Einkleben des Lagers in der übergroßen Lageraufnahme führt zu keiner dauerhaften Verbindung zwischen dem Lager und dem Lageraufnahmeteil, da herkömmliche Klebstoffe keine dauerhaft sichere Verbindung mit den verwendeten Kunststoffen eingehen.

Der bekannte Einsatz von in einem Metallspritzgussverfahren hergestellten Lageraufnahmeteilen aus Aluminium kann zwar den Presssitz von Lagern in entsprechend ausgebildeten Lagersitzen und dessen Haltbarkeit im Betrieb verbessern, jedoch weisen auch solche Bauteile eine relativ geringe Festigkeit auf, so dass sich diese beim Verschrauben oder beim Einpressen des Lagers stark verformen und dann nicht mehr die notwendige Genauigkeit für den Einsatz als Lageraufnahme bereitstellen können.

Aus der Druckschrift DE 43 22 575 A1 ist eine gattungsgemäße Lageranordnung für Außenläufer-Elektromotoren bekannt, wobei zur drehbaren Lagerung eines Rotors ein in einer Lageraufnahme sitzendes Motorlager vorgesehen ist. Die Lageraufnahme besteht einerseits aus drei am Umfang verteilten formstabilen Halteabschnitten, durch die das Motorlager in der Lagerbohrung positioniert ist, und andererseits aus mindestens einem in radialer Richtung elastisch verformbaren Abschnitt, der das Motorlager durch eine kraftschlüssige Anlage in Position hält. Im Bereich der formstabilen Abschnitte sind Bohrungen vorgesehen, um mittels Schraubverbindungen das Lageraufnahmeteil am Stator zu befestigten. Die elastisch verformbaren Abschnitte sind vor dem Einpassen des Motorlagers in radialer Richtung nach innen gewölbt und werden durch die Montage des Motorlagers nach außen gedrückt. Auch die Druckschrift DE 10 2011 113029 A1 beschreibt einen Elektromotor mit einer verbesserten Lageranordnung in einem Lagerteil aus Kunststoff, bei dem die Fixierung des Motorlagers im Lagersitz über mehrere Federelemente erfolgt, die am Umfang des Lagersitzes angeordnet sind. Nach dem Einpassen des Motorlagers in die Lagerbohrung werden die Federarme radial nach außen gedrückt und erzeugen so eine Vorspannung gegenüber dem Motorlager.

Der vorliegenden Erfindung liegt daher die Aufgabe zugrunde eine Lageranordnung für eine Antriebskomponente bereitzustellen die eine zuverlässige Verbindung von einem Lager in einem Lageraufnahmeteil ermöglicht, um eine exakte, stabile und möglichst gleichbleibende Anordnung des Lagers zu realisieren.

Diese Aufgabe wird bei einer gattungsgemäßen Lageranordnung dadurch gelöst, dass im Lageraufnahmeteil angrenzend an die verformbaren Abschnitte jeweils eine Bohrung vorgesehen ist, wobei in der Bohrung jeweils ein Spreizelement eingepresst ist, um die in radialer Richtung vorstehenden verformbaren Abschnitte auszubilden. Die verformbaren Abschnitte liegen im montierten Zustand in einem Presssitz am Lager an und ermöglichen eine stabile gleichbleibende Verbindung zum Lagersitz. Dabei erzeugt der Presssitz die notwendige Vorspannung zur dauerhaften Fixierung des Lagers im Lagersitz und ermöglicht eine Zentrierung des Lagers entsprechend der Anzahl und der Anordnung der in radialer Richtung vorstehenden verformbaren Abschnitte. Die vom Lagersitz ausgebildete radiale Lageraufnahme erstreckt sich im Abstand um die Welle der Antriebskomponente und weist in axialer Richtung, d.h. in Richtung der Drehachse der Welle, eine ausreichende Höhe zur Aufnahme des Lagers auf. Die in den Bohrungen eingepressten Spreizelemente sind im Wesentlichen nicht verformbar, um eine entsprechende Auswölbung der Wand zwischen den Bohrungen und Innenwandung des Lagersitzes zu ermöglichen. Da das Lageraufnahmeteil aus einem relativ weichen und verformbaren Material hergestellt ist, insbesondere Kunststoff, wird durch das Einpressen der Spreizelemente im Wesentlichen nur die Wandung zur Lagerbohrung in Richtung des Lagersitzes vorgewölbt. Das Lageraufnahmeteil kann dabei ein separates Bauteil oder als Teil des Gehäuses der Antriebskomponente ausgebildet sein. Die durch die Spreizelemente ausgebildeten verformbaren Abschnitte im Lagersitz des Lageraufnahmeteils werden beim Einpressen des Lagers verformt und können dadurch auch im späteren Betrieb das eingepresste Lager satt halten, so dass ein Durchrutschen oder ein Mitdrehen des Lagers sicher verhindert wird. Dies ermöglicht die Bereitstellung einer kostengünstigen Lageranordnung für eine Antriebskomponente eines elektrischen Antriebs, insbesondere für einen Elektromotor oder ein Getriebe mit einer zuverlässigen Verbindung für das Lager der Antriebskomponente.

Eine bevorzugte Ausführungsform sieht vor, dass zwischen zwei verformbaren Abschnitten jeweils ein Zwischenbereich vorgesehen ist, der gegenüber einem im Lagersitz anordbaren Lager ein Spiel aufweist, so dass der Lagersitz eine polygonförmige Lageraufnahme ausbildet. Diese im zusammengebauten Zustand gegenüber dem Lager im Wesentlichen kontaktfreien Zwischenbereiche bilden zusammen mit den in radialer Richtung vorstehenden verformbaren Abschnitten eine oszillierende Kontur des Lagersitzes mit relativ kurzen in radialer Richtung vorstehenden verformbaren Abschnitten aus. Eine solche polygonförmige Lageraufnahme ermöglicht ein leichtes Einpressen des Lagers und die sichere Anformung der verformbaren Abschnitte an den Außenumfang des Lagers.

Eine zweckmäßige Ausbildung sieht vor, dass die in radialer Richtung vorstehenden verformbaren Abschnitte gleichmäßig verteilt am Umfang der radialen Lageraufnahme angeordnet sind, wobei bevorzugt mindestens drei in radialer Richtung vorstehende verformbare Abschnitte vorgesehen sind. Die gleichmäßige Verteilung der in radialer Richtung vorstehenden verformbaren Abschnitte erleichtert die Montage des Lagers sowie dessen Zentrierung in der radialen Lageraufnahme. Weiter erleichtert der Einsatz von mindestens drei in radialer Richtung vorstehenden verformbaren Abschnitte ein gleichmäßiges sattes Anliegen der Abschnitte an ein eingepresstes Lager.

Günstigerweise können sich die Bohrungen im Lageraufnahmeteil achsparallel zur Drehachse der Welle erstrecken. Das in dem Lagersitz des Lageraufnahmeteils anordbare Lager dient zur drehbaren Lagerung der Welle der Antriebskomponente um deren Drehachse und definiert so eine axiale Richtung der Lageranordnung, in die sich die Bohrungen bevorzugt erstrecken. Entsprechend erstreckt sich eine radiale Richtung der Lageranordnung senkrecht zur Drehachse. Die achsparallele Ausbildung der Bohrungen im Lageraufnahmeteil zur Drehachse der Welle ermöglicht eine gleichmäßige Auswölbung der in radialer Richtung vorstehenden verformbaren Abschnitte und damit auch einen sicheren Presssitz eines von den vorstehenden verformbaren Abschnitten gehaltenen Lagers.

Eine nützliche Modifikation der Lageranordnung sieht vor, dass die Wandstärke der Bohrungen im Lageraufnahmeteil gegenüber einer Innenwandung des Lagersitzes, bzw. der ursprünglichen zylindrischen Lagerbohrung, kleiner als der Durchmesser der Bohrung ist, bevorzugt kleiner als der Bohrungsradius ist. Dies ermöglicht die Ausbildung ausreichend in radialer Richtung vorstehender verformbarer Abschnitte. Gleichzeitig kann eine ausreichende Wandstärke zur Innenwandung der Lagerbohrung eine Rissbildung verhindern und die Ausfallwahrscheinlichkeit minimieren. Dabei ist die gewählte Wandstärke nicht nur von dem Unterschied der in radialer Richtung vorstehenden verformbaren Abschnitte und der jeweiligen Zwischenbereiche des Lagersitzes abhängig, sondern auch von dem E-Modul des Materials der Lageranordnung.

Aus Vereinfachungsgründen können die in den Bohrungen eingepressten Spreizelemente als Zylinderstifte ausgebildet sein. Diese ermöglicht eine gleichmäßiges Auswölben der Wandung zwischen den Bohrungen und der Lagerbohrung, insbesondere auch im Verhältnis zu den anderen in radialer Richtung vorstehenden verformbaren Abschnitte. Solche im Wesentlichen nicht verformbaren Zylinderstifte sind üblicherweise als Normteile verfügbar und können daher kostengünstig bereitgestellt werden.

Für eine sichere Formgebung der in radialer Richtung vorstehenden verformbaren Abschnitte können die Spreizelemente gegenüber den Bohrungen im Lageraufnahmeteil ein Übermaß des Durchmessers von mindestens 5 %, bevorzugt von mindestens 10 % aufweisen. Dies ermöglicht eine gleichmäßige Aufweitung der Bohrungen und gleichzeitig ein ausreichendes Auswölben der in radialer Richtung vorstehenden Abschnitte, so dass trotz einer einfachen Produktion mit geringem Ausschuss ein dauerhaft sicherer Presssitz eines eingepressten Lagers ermöglicht wird.

Des Weiteren bezieht sich die vorliegende Erfindung auf eine Antriebskomponente eines elektrischen Antriebs, insbesondere einen Elektromotor oder ein Getriebe mit einem Gehäuse, einer Welle, einem Lager zur drehbaren Lagerung der Welle und einem oben beschriebenen Lageraufnahmeteil mit einer Lageranordnung, wobei das Lager in einem Lagersitz der Lageranordnung angeordnet ist. Dabei kann das Lageraufnahmeteil ein separates am Gehäuse befestigtes oder ein mit dem Gehäuse drehfest verbundenes Bauteil oder als Teil des Gehäuses ausgebildet sein. Die in radialer Richtung vorstehenden verformbaren Abschnitte liegen in einem Presssitz an dem Lager an, wobei die zwischen zwei verformbaren vorstehenden Abschnitten vorgesehenen Zwischenbereiche ein Spiel, bevorzugt einen Spalt, gegenüber dem Lager aufweisen. Dies ermöglicht einen satten Presssitz des Lagers, wobei in einer solchen polygonförmigen Lageraufnahme nur die vorstehenden verformbaren Abschnitte zwischen den vorspannungsfreien oder kontaktfreien Zwischenbereichen am Lager anliegen und so ein Durchrutschen oder eine Bewegung des Lagers sicher verhindern. Gleichzeitig ermöglicht das Vorsehen von mehreren, bevorzugt von mindestens drei in radialer Richtung vorstehenden verformbaren Abschnitten in Verbindung mit den vorspannungsfreien oder kontaktfreien Zwischenbereichen eine exakte Zentrierung des Lagers im Lagersitz.

Vorteilhafterweise kann das Lager der Antriebskomponente als ein Wälzlager ausgebildet sein, bevorzugt als ein Kugellager ausgebildet sein, wobei das Lager insbesondere eine Außenlagerschale, die mit einem Presssitz in dem Lagersitz angeordnet ist, eine Vielzahl von Wälzkörper und eine Innenlagerschale aufweist, die mit einem Presssitz auf der Welle angeordnet ist. Wälzlager und Kugellager, mit einem herkömmlichen Lageaufbau aus Lagerschale, Wälzkörper und Innenlagerschale ermöglichen eine gute, reibungsarme und dauerhafte Lagerung der Welle. Weiterhin sind Wälzlager und Kugellager genormte Bauteile die in guter Qualität günstig bereitgestellt werden können.

Ein Ausführungsbeispiel sieht vor, dass der Lagersitz in dem Lageraufnahmeteil eine sich radial erstreckende Anschlagstufe aufweist, an der die Außenschale des Lagers in axialer Richtung anliegt. Die Außenlagerschale steht gegenüber der radialen Lageraufnahme des Lagersitzes in Richtung der Welle radial vor um eine sichere axiale Anordnung und dauerhafte Positionierung des Lagers in dem Lageraufnahmeteil zu ermöglichen.

Weiterhin betrifft die vorliegende Erfindung ein Verfahren zum Herstellen eines Lageraufnahmeteils für eine Antriebskomponente eines elektrischen Antriebs, insbesondere für einen der vorher beschriebenen Antriebskomponenten, bevorzugt mit einer der weiter oben beschriebenen Lageranordnungen, mit den Schritten: Bereitstellen eines Lageraufnahmeteils mit einer zylindrischen Lagerbohrung zur Anordnung eines Lagers und mit mindestens drei am Umfang der Lagerbohrung im Abstand zur Lagerbohrung angeordneten Bohrungen; Einpressen von Spreizelementen, insbesondere von Zylinderstiften, in die am Umfang der Lagerbohrung an geordneten Bohrungen; Ausbilden der in radialer Richtung vorstehenden verformbaren Abschnitte einer radialen Lageraufnahme zum Aufnehmen des Lagers in der Lagerbohrung des Lageraufnahmeteils mittels des Einpressens der Spreizelemente. Dieses Verfahren ermöglicht die Herstellung eines kostengünstigen Lageraufnahmeteils für eine Antriebskomponente mit einer sicheren Lageranordnung für ein Lager, wobei das Lager satt in den Lagersitz eingepresst werden kann und dort durch die in radialer Richtung vorstehenden verformbaren Abschnitte dauerhaft durchrutschsicher gehalten wird.

Im Folgenden werden nicht einschränkende Ausführungsformen der vorliegenden Erfindung anhand von beispielhaften Zeichnungen näher erläutert. Es zeigen:
- Figur 1:: eine Schnittansicht durch den Lagerbereich einer Antriebskomponente,
- Figur 2:: eine Draufsicht auf den Lagersitz des Lageraufnahmeteils der Antriebskomponente aus Figur 1 vor dem Einpressen der Spreizstifte;
- Figur 3:: eine perspektivische Ansicht des Lagersitzes aus Figur 2; und
- Figur 4:: eine perspektivische Ansicht des Lagersitzes aus Figur 3 nach dem Einpressen der Spreizstifte.

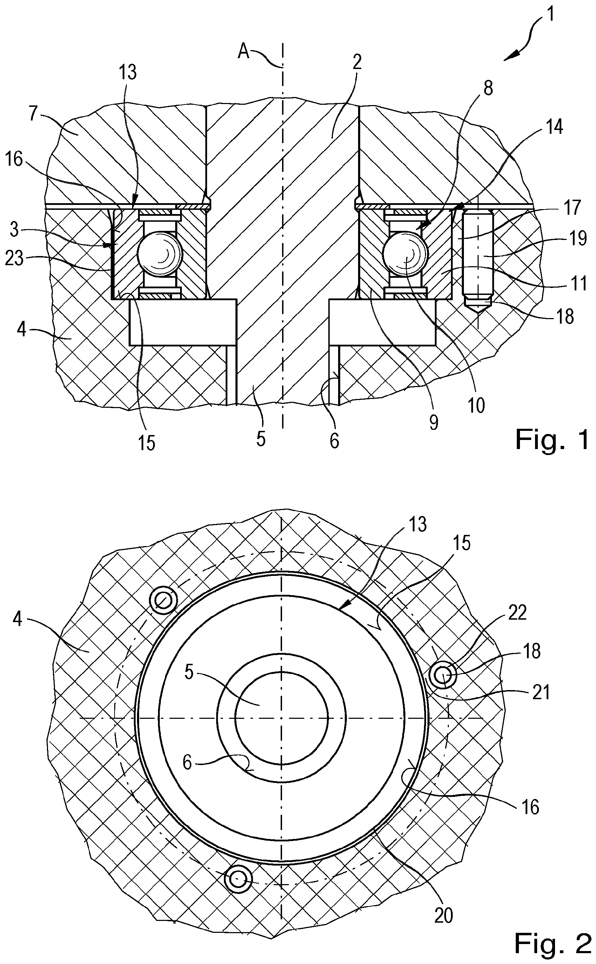

Die Schnittansicht in Figur 1 zeigt einen Längsschnitt durch einen Lagerbereich einer Antriebskomponente 1 eines elektrischen Antriebs, beispielsweise eines Elektromotors oder eines Getriebes entlang der axialen Drehachse A der Welle 2. Die Welle 2 ist mittels eines Lagers 3 in einem Lageraufnahmeteil 4 drehbar gelagert. Die Welle 2 weist jenseits des Lagers 3 ein sich verjüngendes Wellenende 5 auf, das sich unterhalb des Lagers 3 durch eine Wellenöffnung 6 im Lageraufnahmeteil 4 hindurch erstreckt. An dem sich oberhalb des Lagers 3 erstreckenden Bereich der Welle 2 ist ein Rotorelement 7 vorgesehen welches mit der Welle 2 verbunden ist. Das Lager 3 ist in der in Figur 1 gezeigten Ausführungsform als Kugellager 8 ausgebildet mit einer Innenlagerschale 9, die auf der Welle 2 aufgepresst ist, einer Vielzahl von Lagerkugeln 10 und einer Außenlagerschale 11, die in einem Presssitz im Lagersitz 12 des Lageraufnahmeteils 4 angeordnet ist.

Der Lagersitz 12 für das Lager 3 ist in einer zylindrischen Lagerbohrung 13 des Lageraufnahmeteils 4 ausgebildet und weist neben einer radialen Lageraufnahme 14 auch eine axiale Anschlagstufe 15 auf, die sich von der Innenwandung 16 der zylindrischen Lagerbohrung 13 radial nach innen in Richtung der axialen Drehachse A erstreckt und ein Auflager für die Außenlagerschale 11 des Kugellager 8 bildet. Die radiale Lageraufnahme 14 des Lagersitzes 12 weist mehrere in radialer Richtung vorstehende verformbare Abschnitte 17 auf, die gleichmäßig verteilt am Umfang der zylindrischen Lagerbohrung 13 positioniert sind und das Lager 3 in einem Presssitz aufnehmen. Dabei liegen die vorstehenden verformbaren Abschnitte 17 mit einer Vorspannung an der Außenlagerschale 11 des hier verwendeten Kugellagers 8 an und ermöglichen eine stabile, im wesentlichen gleichbleibende Positionierung des Lagers 3 im Lageraufnahmeteil 4.

Zur Ausgestaltung der in radialer Richtung in die zylindrische Lagerbohrung 13 vorstehenden verformbaren Abschnitte 17 sind in einem verhältnismäßig kleinen Abstand zur Innenwandung 16 der zylindrischen Lagerbohrung 13 mehrere Bohrungen 18 vorgesehen die jeweils mit einem Spreizelement 19 versehen sind. Wie sehr gut in der Draufsicht auf den Lagersitz 12 des Lageraufnahmeteils 4 in Figur 2 zu erkennen sind die Bohrungen 18 gleichmäßig am Umfang der zylindrischen Lagerbohrung 13 verteilt, um eine möglichst gute Zentrierung des Lagers 3 und damit auch der Welle 2 gegenüber dem Lageraufnahmeteil 4 zu erreichen. In der Draufsicht sind neben dem Wellenende 5 der Welle 2 und der Wellenöffnung 6 auch die zylindrische Lagerbohrung 13 sowie die axiale Anschlagstufe 15 in der zylindrischen Lagerbohrung 13 zu erkennen. Die zylindrische Lagerbohrung 13 weist an der Innenwandung 16 gegenüber der Oberfläche des Lageraufnahmeteils 4 eine umlaufende Fase 20 auf, die bei der Montage des Lagers 3 das Einpressen des Lagers 3 in die radiale Lageraufnahme 14 erleichtert.

Die Ausbildung der in radialer Richtung vorstehenden verformbaren Abschnitte 17 des Lagersitzes 12 erfolgt über die in die Bohrungen 18 eingepressten, nicht verformbaren Spreizelemente 19, die mit einem relativ großen Übermaß von mindestens 5 %, bevorzugt mindestens 10 % gegenüber dem Durchmesser der Bohrungen 18 in diese eingepresst werden. Durch das Einpressen der Spreizelemente 19 dehnt sich die Wandung 21 des Lageraufnahmeteils 4 zwischen der Bohrung 18 und der Innenwandung 16 der zylindrischen Lagerbohrung 13 in radialer Richtung aus, so dass sich die in radialer Richtung vorstehenden verformbaren Abschnitte 17 der radialen Lageraufnahme 14 den Lagersitz 12 ausbilden. Dazu ist das Lageraufnahmeteil 4 aus einem verformbaren Werkstoff, insbesondere aus Kunststoff hergestellt, der ein Ausdehnen der Wandung 21 in Richtung der zylindrischen Lagerbohrung 13 ermöglicht. Als Spreizelemente 19 werden bevorzugt Zylinderstifte eingesetzt die als Normteile in den benötigten Abmessungen kostengünstig bereitgestellt werden können. Dabei ist die Länge der Spreizelemente 19 kürzer als die Tiefe der als Sacklöcher ausgebildeten Bohrungen 18, so dass die eingepressten Spreizelemente 19 nicht gegenüber der Oberfläche des Lageraufnahmeteils 4 vorstehen. Wie in Figur 2 zu sehen sind zum einfachen Einpressen der Spreizelemente 19 an den offenen Enden der Bohrungen 18 umlaufende Bohrungsfasen 22 vorgesehen, die trotz des großen Übermaßes der Spreizelemente 19 ein Einführen der Spreizelemente 19 in die Bohrungen 18 ermöglichen. Das Lageraufnahmeteil 4 in Figur 2 zeigt im Gegensatz zu der Schnittdarstellung in Figur 1 die Bohrungen 18 ohne die eingepressten Spreizelemente 19 und damit auch ohne in radialer Richtung vorstehenden verformbaren Abschnitte 17.

Zwischen den in radialer Richtung vorstehenden verformbaren Abschnitte 17 sind in der radialen Lageraufnahme 14 jeweils Zwischenbereiche 23 vorgesehen die gegenüber der Drehachse A den ursprünglichen Radius der zylindrischen Lagerbohrung 13 aufweisen, da diese Zwischenbereiche 23 durch das Einpressen der Spreizelemente 19 in die Bohrungen 18 nicht verformt werden, siehe Figur 1. Im Gegensatz zu den radial vorstehenden Abschnitten 17 weisen diese Zwischenbereiche 23 in einem zusammengebauten Zustand mit einem in einem Presssitz an den radial vorstehenden Abschnitten 17 anliegenden Lager 3 ein Spiel gegenüber der Außenlagerschale 11 auf. Dabei kann das Spiel zwischen der Außenlagerschale 11 des Lagers 3 und der Innenwandung 16 der radialen Lageraufnahme 14 sowohl eine kontaktfreie Positionierung mit einem Spalt zwischen Außenlagerschale 11 und Innenwandung 16 als auch ein vorspannungsfreies Anliegen der Außenlagerschale 11 an der Innenwandung 16 umfassen.

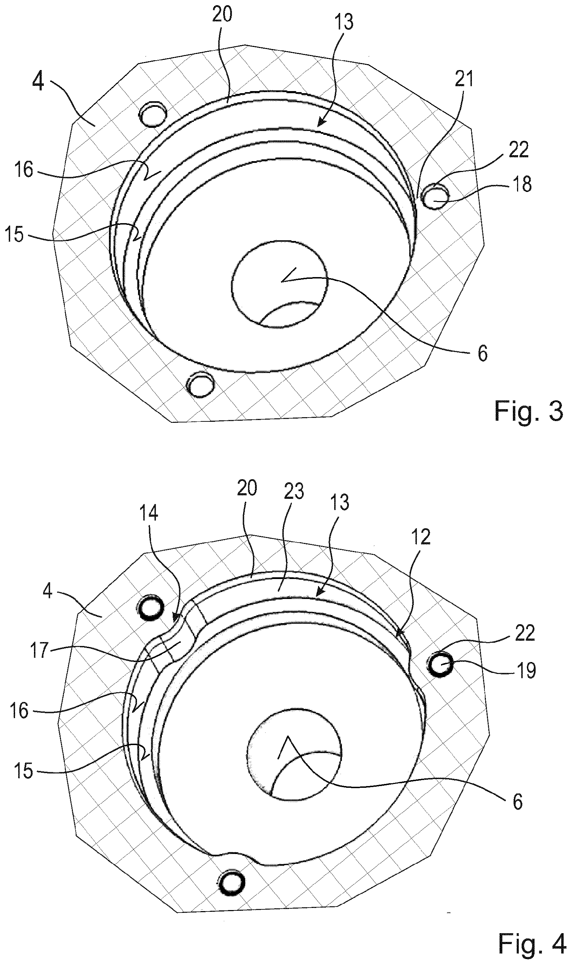

Im Folgenden wird die Herstellung einer erfindungsgemäßen Lageranordnung für eine Antriebskomponente 1 anhand des in den Figuren 3 und 4 gezeigten Lageraufnahmeteils 4 erläutert. Zunächst wird das Lageraufnahmeteil 4 als separates Bauteil oder als Teil des Gehäuses der Antriebskomponente 1 bereitgestellt. Das Lageraufnahmeteil 4 bzw. das Gehäuse der Antriebskomponente 1 ist aus einem verformbaren Werkstoff ausgebildet, beispielsweise aus Kunststoff oder einer Aluminiumlegierung, und üblicherweise in einem Spritzgießverfahren oder einem Druckgussverfahren hergestellt. In dem Lageraufnahmeteil 4 ist eine zunächst zylindrische Lagerbohrung 13 vorgesehen die am Rand zur Oberfläche des Lageraufnahmeteils 4 eine umlaufende Fase 20 aufweist um bei der Endmontage des Lagers 3 eine bessere Zentrierung und ein leichteres Einpressen zu erlauben. Am Boden der zylindrischen Lagerbohrung 13 ist mittig eine Wellenöffnung 6 vorgesehen durch die im zusammengebauten Zustand die Welle 2 der Antriebskomponente 1 nach außen geführt wird. Angrenzend an die Innenwandung 16 der zylindrischen Lagerbohrung 13 ist am Boden die axiale Anschlagstufe 15 zu erkennen an der im zusammengebauten Zustand das Lager 3 bzw. die Außenlagerschale 11 eines Kugellagers 8 anliegt. Am Umfang der zylindrischen Lagerbohrung 13 sind in einem geringen Abstand zur Innenwandung 16 gleichmäßig verteilt drei als Sacklöcher ausgebildete Bohrungen 18 mit Bohrungsfasen 22 an der Oberfläche des Lageraufnahmeteils 4 vorgesehen. Bei der Herstellung der radialen Lageraufnahme 14 werden in diese Bohrungen 18 jeweils ein Spreizelement 19 eingepresst, wobei die Spreizelemente 19 Hinblick auf die zylindrischen Bohrungen 18 bevorzugt als Zylinderstifte ausgebildet sind die vollständig in den Bohrungen 18 aufgenommen sind und so nicht an der Oberfläche des Lageraufnahmeteils 4 vorstehen.

Figur 4 zeigt das Lageraufnahmeteil 4 nach dem Einpressen der Spreizelemente 19 in die Bohrungen 18 am Rand der zylindrischen Lageraufnahme 13. Durch das Einpressen der Spreizelemente 19 wölbt sich die Wandung 21 zwischen den Bohrungen 18 und der Innenwandung 16 der zylindrischen Lagerbohrung 13 in Richtung der Drehachse A und bildet so die radial vorstehenden verformbaren Abschnitte 17 der radialen Lageraufnahme 14 aus. Zwischen den radial vorstehenden verformbaren Abschnitten 17 sind Zwischenbereiche 23 zu sehen bei den sich die Innenwandung 16 der zylindrischen Lagerbohrung 13 nicht verformt hat. Wie in Figur 4 gut zu erkennen ist, stehen die verformbaren Abschnitte 17 im Wesentlichen über die gesamte axiale Höhe der Innenwandung 16 radial nach innen vor.

Beim Einpressen eines Lagers 3 in den Lagersitz 12 des Lageraufnahmeteils 4 werden die radial vorstehenden Abschnitte 17 der radialen Lageraufnahme 14 verformt, während das Lager 3 in die Zwischenbereiche 23 ohne Vorspannung hineingleitet. Durch die drei gleichmäßig am Umfang verteilten radial vorstehenden verformbaren Abschnitte 17 wird das Lager 3 in der zylindrischen Lagerbohrung 13 zentriert. Die an der Oberfläche des Lageraufnahmeteils 4 vorgesehene Fase 20 um die zylindrische Lagerbohrung 13 erleichtert die Führung und die Aufnahme des Lagers 3 beim Einpressen in den Lagersitz 12. Das Lager 3 wird gegen die Vorspannung der radial vorstehenden verformbaren Abschnitte 17 in die radiale Lageraufnahme 14 eingeschoben bis das Lager 3 an der axialen Außenlagerschale 15 anliegt. Im Bereich der radial vorstehenden Abschnitte 17 wird das eingepresste Lager 3 satt gehalten, da die gegenüber der Innenwandung 16 der zylindrischen Lagerbohrung 13 deutlich radial vorstehenden Abschnitte 17 eine verhältnismäßig hohe Vorspannung auf die Außenlagerschale 11 des Lagers 3 aufbringen. Die polygonförmige Ausbildung des Lagersitzes 12 durch die in der zylindrischen Lagerbohrung 13 im Wechsel angeordneten radial vorstehenden verformbaren Abschnitte 17 und Zwischenbereiche 23 kann im Betrieb dauerhaft ein Durchrutschen oder eine Bewegung des Lagers 3 in der zylindrischen Lagerbohrung 13 sicher verhindert werden.

Die erfindungsgemäße Ausgestaltung einer Lageranordnung für eine Antriebskomponente 1 ermöglicht die kostengünstige Bereitstellung eines Lageraufnahmeteils 4 sowie die sichere Verbindung des Lagers 3 mit dem Lageraufnahmeteil 4. Die zylindrische Lagerbohrung 13 und die zusätzlichen Bohrungen 18 für die Spreizelemente 19 können bei der Herstellung des Lageraufnahmeteils 4 einfach und günstig ausgebildet werden. Gleichzeitig werden keine besonders hohen Anforderungen an die Toleranzen für die zylindrische Lagerbohrung 13 und die zusätzlichen Bohrungen 18 gestellt, da die Anordnung des Lagers 3 in dem Lagersitz 12 von der Verformung der radial vorstehenden Abschnitte 17 bestimmt und zwischen diesen zentriert wird. Auch die Spreizelemente 19 können als einfache Zylinderstifte ausgebildet sein und kostengünstig als Normteile für die Herstellung bereitgestellt werden. Weiter sind zur Ausbildung der radialen Lageraufnahme 14 die Spreizelemente 19 lediglich bündig mit der Oberfläche des Lageraufnahmeteils 4 oder versenkt in die Bohrungen 18 einzupressen. Die polygonförmige Ausgestaltung des Lagersitzes 12 ermöglichen über die verteilt in der zylindrischen Lagerbohrung 13 angeordneten radial vorstehenden verformbaren Abschnitten 17 eine gleichmäßige Fixierung des Lagers 3 durch eine hohe Vorspannung, wobei die Streuung des Anpressdrucks der radialen Lageraufnahme 14 auf das Lager 3 im Gegensatz zu herkömmlichen Herstellungsmethoden deutlich geringer ist, wodurch der Ausschuss bei der Herstellung der Lageraufnahmeteile 4 von Antriebskomponenten 1 reduziert werden kann.

### Bezugszeichenliste:

- 1: Antriebskomponente
- 2: Welle
- 3: Lager
- 4: Lageraufnahmeteil
- 5: Wellenende
- 6: Wellenöffnung
- 7: Rotorelement
- 8: Kugellager
- 9: Innenlagerschale
- 10: Lagerkugeln
- 11: Außenlagerschale
- 12: Lagersitz
- 13: zylindrische Lagerbohrung
- 14: radiale Lageraufnahmen
- 15: axiale Anschlagstufe
- 16: Innenwandung
- 17: vorstehende verformbare Abschnitte
- 18: Bohrungen
- 19: Spreizelement
- 20: Fase
- 21: Wandung
- 22: Bohrungsfasen
- 23: Zwischenbereiche

- A: Drehachse

## Patentansprüche

1. Eine Lageranordnung für eine Antriebskomponente (1) eines elektrischen Antriebs, insbesondere für einen Elektromotor oder ein Getriebe mit einem Lageraufnahmeteil (4) und einem in dem Lageraufnahmeteil (4) ausgebildeten Lagersitz (12), in dem ein Lager (3) der Antriebskomponente zur drehbaren Lagerung einer Welle (2) der Antriebskomponente (1) anordbar ist, wobei eine radiale Lageraufnahme (14) des Lagersitzes (12) mehrere in radialer Richtung vorstehende verformbare Abschnitte (17) aufweist, die an einem im Lagersitz (12) anordbaren Lager (3) anliegen,
**dadurch gekennzeichnet, dass** im Lageraufnahmeteil (4) angrenzend an die vorstehenden verformbaren Abschnitte (17) jeweils eine Bohrung (18) vorgesehen ist, wobei in der Bohrung (18) jeweils ein Spreizelement (19) eingepresst ist, um die in radialer Richtung vorstehenden verformbaren Abschnitte (17) auszubilden.

2. Die Lageranordnung für eine Antriebskomponente (1) nach Anspruch 1,
**dadurch gekennzeichnet, dass** zwischen zwei vorstehenden verformbaren Abschnitten (17) jeweils ein Zwischenbereich vorgesehen ist, der gegenüber einem im Lagersitz (12) anordbaren Lager (3) ein Spiel aufweist, so dass der Lagersitz (12) eine polygonförmige Lageraufnahme ausbildet.

3. Die Lageranordnung für eine Antriebskomponente (1) nach Anspruch 1 oder 2,
**dadurch gekennzeichnet, dass** die in radialer Richtung vorstehenden verformbaren Abschnitten (17) gleichmäßig verteilt am Umfang der radialen Lageraufnahme (14) angeordnet sind, wobei bevorzugt mindestens drei in radialer Richtung vorstehende verformbare Abschnitte (17) vorgesehen sind.

4. Die Lageranordnung für eine Antriebskomponente (1) nach einem der Ansprüche 1 bis 3,
**dadurch gekennzeichnet, dass** die Bohrungen (18) im Lageraufnahmeteil (4) sich achsparallel zur Drehachse A der Welle (2) erstrecken.

5. Die Lageranordnung für eine Antriebskomponente (1) nach einem der Ansprüche 1 bis 4,
**dadurch gekennzeichnet, dass** die Wandstärke der Bohrungen (18) im Lageraufnahmeteil (4) gegenüber einer Innenwandung (16) des Lagersitzes (12) kleiner als der Bohrungsdurchmesser ist, bevorzugt kleiner als der Bohrungsradius ist.

6. Die Lageranordnung für eine Antriebskomponente (1) nach einem der Ansprüche 1 bis 5,
**dadurch gekennzeichnet, dass** die in den Bohrungen (18) eingepressten Spreizelemente (19) als Zylinderstifte ausgebildet sind.

7. Die Lageranordnung für eine Antriebskomponente (1) nach einem der Ansprüche 1 bis 6,
**dadurch gekennzeichnet, dass** die Spreizelemente (19) gegenüber den Bohrungen (18) im Lageraufnahmeteil (4) ein Übermaß des Durchmessers von mindestens 5 %, bevorzugt von mindestens 10 % aufweisen.

8. Eine Antriebskomponente (1) eines elektrischen Antriebs, insbesondere ein Elektromotor oder ein Getriebe mit einem Gehäuse, einer Welle (2), einem Lager (3) zur drehbaren Lagerung der Welle (2) und einem Lageraufnahmeteil (4) mit einer Lageranordnung nach einem der Ansprüche 1 bis 7, wobei das Lager (3) in einem Lagersitz (12) der Lageranordnung angeordnet ist,
**dadurch gekennzeichnet, dass** die in radialer Richtung vorstehenden verformbaren Abschnitte (17) in einem Presssitz an dem Lager (3) anliegen, und wobei die zwischen zwei vorstehenden verformbaren Abschnitten (17) vorgesehenen Zwischenbereiche (23) ein Spiel gegenüber dem Lager (3) aufweisen.

9. Die Antriebskomponente (1) nach Anspruch 8,
**dadurch gekennzeichnet, dass** das Lager (3) als ein Wälzlager ausgebildet ist, bevorzugt als ein Kugellager (8) ausgebildet ist, wobei das Lager (3) eine Außenlagerschale (11), die mit einem Presssitz in dem Lagersitz (12) angeordnet ist, eine Vielzahl von Wälzkörpern und eine Innenlagerschale (9) aufweist, die mit einem Presssitz auf der Welle (2) angeordnet ist.

10. Die Antriebskomponente (1) nach Anspruch 9,
**dadurch gekennzeichnet, dass** der Lagersitz (12) in dem Lageraufnahmeteil (4) eine sich radial erstreckende Anschlagstufe (15) aufweist, an der die Außenlagerschale (11) des Lagers (3) in axialer Richtung anliegt.

11. Ein Verfahren zum Herstellen eines Lageraufnahmeteils (4) für eine Antriebskomponente eines elektrischen Antriebs, insbesondere einen Elektromotor oder ein Getriebe (1) mit den Schritten:
Bereitstellen eines Lageraufnahmeteils (4) mit einer zylindrischen Lagerbohrung (13) zur Anordnung eines Lagers (3) und mit mindestens drei am Umfang der Lagerbohrung (13) im Abstand zur Lagerbohrung (13) angeordneten Bohrungen (18);
Einpressen von Spreizelementen (19) in die am Umfang der Lagerbohrung (13) angeordneten Bohrungen (18);
Ausbilden der in radialer Richtung vorstehenden verformbaren Abschnitte (17) einer radialen Lageraufnahme (14) zum Aufnehmen des Lagers (3) in der Lagerbohrung (13) des Lageraufnahmeteils (4) mittels des Einpressens der Spreizelemente (19).
